# EUROPEAN PATENT APPLICATION

(11) **EP 1 967 775 A1**
(43) Date of publication of application: **10.09.2008**
(21) Application number: 07103885.5
(22) Date of filing: 09.03.2007
(51) Int. Cl.: F16K 15/04, F16K 17/04, F16K 27/02

(54) **A Valve**

(71) Applicant: Delphi Technologies, Inc., Troy, MI 48007 (US)
(72) Inventor: Marx, Patrice, 54650 Saulnes (FR); Sanchez, Michel, 54260 Allondrelle (FR)
(74) Representative: Jones, Keith William

(57) **Abstract**

The invention relates to pressure relief valves of the type used, for example, in automotive fuel system pressure regulators. The valve (1) provided comprises adjusting means (7) for adjusting the force applied to the valve member (12) by the biasing means (11). The adjusting means (7) may allow the valve (1) to be set before installation to open or close at different fluid pressure thresholds in many different applications.

## Description

The present invention relates to valves and in particular, but not exclusively, to pressure relief valves of the type used, for example, in automotive fuel system pressure regulators.

Pressure relief valves typically comprise an inlet, an outlet, a valve member and means, responsive to pressure in a fluid external to the valve, for moving the valve member between an inlet closed position, at which the fluid flow between the inlet and outlet is prevented, and an inlet open position, at which fluid is permitted to flow between the inlet and the outlet, and thereby to relieve the pressure in the source when it rises above a threshold.

This type of valve is typically used as a safety device, for example, in fuel systems, but can be used in many applications including systems involving fuel system pressure regulators.

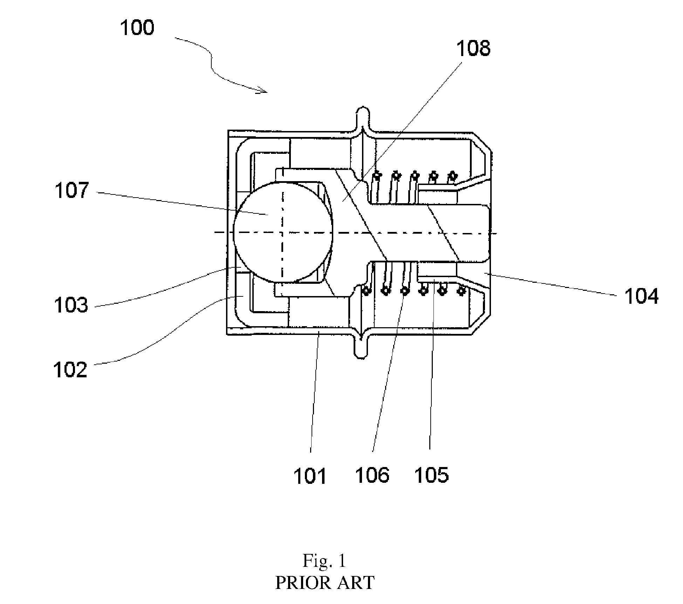

A known pressure relief valve (100) is shown in Figure 1 of the accompanying drawings. It comprises a cylindrical body (101) and an end cover (102), collectively providing a housing having an inlet (103) and outlet (104). The outlet (104) comprises an inwardly facing seat (105) providing support for a cylindrical coil spring (106). A spherical valve member (107) is forced into an inlet closed position (as shown) by the coil spring (106), that is to say, it is forced into contact with the inlet (103) to close the valve (100).

A cup (108) is also provided between the spherical valve member (107) and the coil spring (106) to both contain and axially guide the valve member (106) into contact with the inlet (103).

When the pressure of the fuel, external to the inlet (103), exceeds a threshold proportional to the spring force of the coil spring (106), the valve member (107) is forced away from the inlet (103), into an inlet open position, allowing fuel to enter and flow through the valve (100).

The cylindrical body (101), end cover (102) and cup (108) are metallic which increases the weight of the valve (100) and may be subject to corrosion, especially when the fluid is corrosive to metallic materials. The end cover (102), in particular, requires costly machining before being fixed to the cylindrical body (101) by expensive joining techniques.

Another significant disadvantage of this type of valve is that the threshold pressure which must be exceeded, before the valve (100) will open, is fixed and may not be adjusted prior to installation in different applications involving different pressures.

According to the present invention there is provided a valve comprising:
a housing having an inlet and at least one outlet;
a valve member moveable between inlet closed and inlet open positions;
biasing means for applying a force to the valve member, that urges the valve member to the inlet closed position; and
adjusting means for adjusting the force applied to the valve member by the biasing means.

Advantageously, the adjusting means may allow the valve to be set to open or close at different fluid pressure thresholds before installation in many different applications. Suitably, the adjusting means may allow the valve to be set, prior to installation, to open at a desired pressure threshold and operate as part of a pressure regulator.

Preferably, the force applied by the biasing means is determined by a condition of the biasing means and the adjusting means comprises condition varying means which cooperates with the biasing means.

Suitably, the condition may be a position of the biasing means and the condition varying means may move the biasing means between, and including, two extreme positions.

The condition varying means may advantageously be integral with the housing which eliminates the need for additional components making up the adjusting means.

Preferably, the condition varying means comprises a moveable member.

Further preferably, the moveable member is deformable to allow for said movement.

Suitably, after deformation, the moveable member may be adapted to remain deformed so its position does not change.

The moveable member may be manually moved to affect the condition of the biasing means and adapted so that the position of the moveable member may not be affected by the fluid pressure threshold and biasing means, after installation of the valve. In other words, after the condition of the biasing means has been changed, the moveable member remains in its changed position and effectively employs a memory characteristic.

The housing may suitably comprise a main body and an end cover.

The main body may include the inlet, and the end cover may comprise the at least one outlet and the condition varying means.

The condition varying means may comprise a seat for the biasing means.

Preferably, the biasing means also comprises an intermediate member located between the biasing means and the valve member which is adapted to contain and axially guide the valve member between the inlet closed and inlet open positions. Additionally, the intermediate member may ensure the valve member is always cooperating with the biasing means irrespective of the orientation of the valve.

The valve member may suitably be substantially spherical and the intermediate member may be a substantially spherical cup adapted to contain the substantially spherical valve member.

Suitably, the biasing means may comprise a spring. This may be a coil spring, preferably a frusto-conical coil spring. This latter type of spring is more stable in situ due to its shape and wider base and may help to ensure the spring is always acting on the valve member, urging it to the inlet closed position, irrespective of the orientation of the valve.

Where the biasing means is a spring, a change in position of the moveable member may accordingly change the length of the spring and, in turn, changing its spring force. The pressure threshold required to compress the spring, and move the valve member into the inlet open position, will also be accordingly changed. For example, if a change in position of the moveable member were to effectively shorten the spring, the stiffness of the spring would increase and an increased pressure threshold would be required to open the valve; and vice versa.

Preferably, the end cover comprises an annular member and the moveable member is disposed centrally inside the annular member of the end cover. Suitably, a plurality of equally-paced, radially arranged, deformable arms extends inwardly from the annular member to suspend the moveable member in the centre of the end cover.

The spaces between each deformable arm define equally-spaced, radially arranged outlets, which advantageously allow for a balanced fluid flow exiting the valve.

Preferably, the end cover is connected to the housing by a connecting means. The connecting means may comprise a plurality of equally spaced hoops arranged around the annular member of the end cover and a plurality of corresponding protrusions may be arranged around the main body. The hoops may be adapted to snap over the corresponding protrusions to provide a 'snap-fit' connection. This type of connection may ease the assembly of the valve.

The end cover may be a deformable material and maybe a ductile metal or plastics material. Importantly, the Young's Modulus of the end cover, particularly the deformable arms, is adequate to allow the moveable member to be moved to affect the condition of the biasing means. Preferably, the Young's Modulus is from 150 kNmm⁻² to 250 kNmm⁻² and suitably is from 180 kNmm⁻² to 220 kNmm⁻². It has been found that a material having a Young's Modulus of from 200 kNmm⁻² to 210 kNmm⁻² is particularly suitable, such as steel. The material is also adequate so that the position of the moveable member may not be affected by the fluid pressure threshold and biasing means, after installation of the valve. A ductile metal or plastics material also provides additional benefits, typically known in the art, at the manufacturing stages.

The main body may also be a plastics material. This may help to ensure corrosion is kept to a minimum, especially where the fluid passing through the system is corrosive, and will also ensure the valve is lightweight and inexpensive to manufacture, relative to metal valves, typically used in the art.

A fuel system comprising a valve as described above is also provided.

An embodiment of the present invention will now be described, by way of example only, with reference to the accompanying drawings, in which:
Figure 1 is a cross-sectional view of a prior art non-adjustable valve;
Figure 2 is a perspective view of a valve, in accordance with the present invention, in which the main body is transparent to show the internal components of the valve;
Figure 3 is a partial cross-sectional view of a valve in accordance with the present invention.

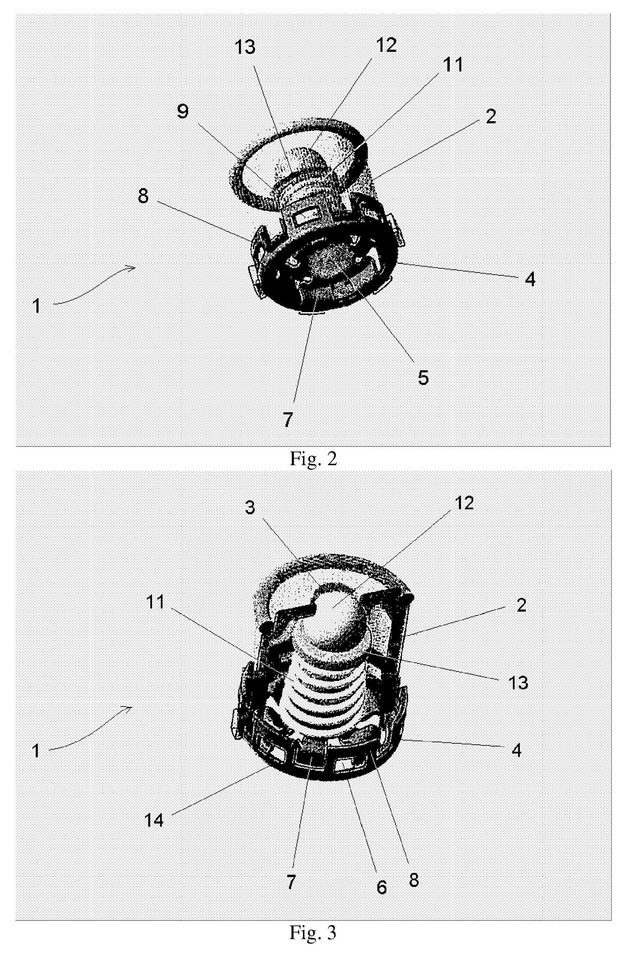

As shown in Figures 2 and 3, an adjustable valve (1), e.g. an adjustable pressure relief valve, comprises an inlet (3) and an outlet (6), a cylindrical main body (2) and an end cover (4), a valve member (12) and a coil spring (11) constituting biasing means. An intermediate member or cup (13) is provided between the valve member (12) and the coil spring (11). The coil spring sits on a moveable member (5), constituting condition varying means, which is suspended by equally spaced deformable arms (7).

The main body (2) includes the inlet (3) at one end and the end cover (4) is connected to the main body (2) at the opposite end. The end cover (4) comprises an annular member (14) from which the equally spaced deformable arms (7) extend inwardly to suspend the moveable member (5), located in the centre of the end cover (4). The spaces (6) between the equally spaced deformable arms (7) define the outlet (6) of the valve (1).

The cover (4) also comprises equally spaced hoops (8) extending longitudinally towards the inlet (3). These hoops (8) are adapted to snap over corresponding protrusions (9) arranged equally around the outside of the main body (2) to provide a 'snap-fit' connection between the end cover (4) and the main body (2).

The deformable arms (7) are formed to provide a spring seat (not shown) for the coil spring (11). The coil spring (11) applies a force to the valve member (12) so as to urge it into the inlet closed valve position (as shown), wherein it contacts the inlet (3) and closes the valve (1), thus preventing fuel entering the valve (1). The inlet (3) also comprises a valve seat (not shown) which the valve member (12) is urged against by the spring (11) to provide an efficient seal when the valve is closed.

The cup (13), provided between the spring (11) and the valve member (12), contains and axially guides the valve member (12) between inlet closed and inlet open positions.

In normal use, the valve member (12) is in an inlet closed position, as shown in Figures 2 and 3. When the pressure of the fluid, external to the valve, exceeds a certain level, sufficient to overcome the force applied to the valve member (12) by the coil spring (11), the valve member (12) is forced axially away from the inlet (3) into an inlet open position, thus allowing fluid to enter the valve and exit the valve via the outlet (6). By allowing the fluid to flow through the valve (1), when a pressure reaches a threshold level, the pressure is relieved and damage, or an unsafe situation, is avoided.

Prior to installation of the valve (1), a force may be applied to the moveable member (5) to move it into different positions, anywhere between, and including, two extreme positions. At a certain force, the material of the deformable arms (7) will reach its yield point and turn plastic, allowing for this movement, and which will also prevent the moveable member returning to its original position. A change in position of the moveable member (5) will accordingly change the length of the spring (11) and, in turn, change its spring force. The pressure threshold required to compress the spring (11), and move the valve member (12) into the inlet open position, will also be accordingly changed. For example, if a change in position of the moveable member (5) were to effectively shorten the spring (11), the spring force of the spring (11) would increase and an increased pressure threshold would be required to open the valve (1); and vice versa.

The moveable member (5) may be moved manually by applying an axial force to the moveable member (12) through a thumb of an installer, for example, or by using tooling to accurately measure the movement of the moveable member (5). After installation and during operation, the moveable member (5) may not move from its position, chosen prior to installation, particularly when the pressure threshold required to open the valve is reached. When this pressure threshold is reached, the force being applied by the spring (11) to the valve member (12) is overcome and the spring (11) is compressed. The valve member (12) is forced from the valve seat (not shown) into the valve open position, allowing fluid to flow through the valve (1) and the pressure in the system is relieved and damage or an unsafe situation is avoided.

## Claims

1. A valve (1) comprising:
- a housing having an inlet (3) and at least one outlet (6);
- a valve member (12) moveable between inlet open and inlet closed positions;
- biasing means (11) applying a force to the valve member (12), that urges the valve member (12) to the inlet closed position; and
- adjusting means (7) for adjusting the force applied to the valve member (12) by the biasing means (11).

2. A valve according to claim 1, wherein the force applied by the biasing means (11) is determined by a condition of the biasing means (11) and the adjusting means (7) comprises condition varying means (5) cooperating with the biasing means (11).

3. A valve according to claim 2, wherein the condition is a position of the biasing means (11) and the condition varying means (5) moves the biasing means (11) between, and including, two extreme positions.

4. A valve according to claim 3, wherein the condition varying means (5) comprises a moveable member (5).

5. A valve according to claim 4, wherein the moveable member (5) is deformable to allow for said movement.

6. A valve according to claim 5, wherein, after deformation, the moveable member (5) remains deformed and its position does not change.

7. A valve according to any preceding claim, wherein the housing comprises a main body (2) and an end cover (4).

8. A valve according to claim 7, wherein the main body (2) includes the inlet (3) and the end cover (4) comprises the at least one outlet (6) and the condition varying means (5).

9. A valve according to any one of claims 2 to 8, wherein the condition varying means (5) comprises a seat for the biasing means (11).

10. A valve according to any preceding claim, wherein the biasing means (11) comprises an intermediate member (13) located between the biasing means (11) and the valve member (12).

11. A valve according to any preceding claim, wherein the biasing means (11) comprises a spring (11).

12. A valve according to claims 4 and 7, wherein the end cover (4) comprises an annular member (14) and the moveable member (5) is disposed centrally inside the annular member (14) of the end cover (4).

13. A valve according to claim 12, wherein a plurality of equally-spaced deformable arms (7) extend inwardly from the annular member (14) to suspend the moveable member (5).

14. A valve according to claim 13, wherein the spaces between each deformable arm define equally-spaced, radially arranged outlets (6).

15. A valve according to any one of claims 7 to 14, wherein the end cover (4) is connected to the main body (2) by a connecting means.

16. A valve according to claims 12 and 15, wherein the connecting means comprise a plurality of equally spaced hoops (8) arranged around the annular member (14) of the end cover (4) and a plurality of corresponding protrusions (9) arranged around the main body (2), the hoops (8) snapping over the corresponding protrusions (9) to provide a 'snap-fit' connection.

17. A valve according to any one of claims 7 to 16, wherein the main body (2) or end cover (4) is a plastics material.

18. A valve according to any one of claims 7 to 16, wherein the end cover (4) is a ductile metallic material.

19. A fuel system comprising a valve (1) as claimed in any one of claims 1 to 18.
